# EUROPEAN PATENT APPLICATION

(11) **EP 4 845 216 A1**
(43) Date of publication of application: **25.11.2026**
(21) Application number: 24925886.4
(22) Date of filing: 22.02.2024
(51) Int. Cl.: H04W 28/26, H04W 48/16, H04W 88/02, H04W 88/18

(54) **COMMUNICATION CONTROL DEVICE AND COMMUNICATION CONTROL METHOD**

(71) Applicant: Softbank Corp., Tokyo 105-7529 (JP)
(72) Inventor: OTA, Yuki, Tokyo 105-7529 (JP)
(74) Representative: SSM Sandmair
(86) International application number: PCT/JP2024/006610
(87) International publication number: WO 2025/177555

(57) **Abstract**

A communication control apparatus (100) includes a prediction unit (131) and a providing unit (132). The prediction unit (131) compares information indicating a set area, a set date/time, and desired quality that are set by a user in relation to use of a wireless communication service, area information indicating an area covered by the wireless communication service, and predicts whether or not it is possible to provide the wireless communication service that meets the desired quality in the set area and at the set date/time. The providing unit (132) provides a prediction result obtained by the prediction unit to the user.

## Description

### Field

The present disclosure is related to a communication control apparatus and a communication control method.

### Background

In recent years, services compatible with the fifth generation wireless communication system, that is, what is called 5th Generation (5G), are diversified, and it is demanded to make effective use of resources for wireless communication services. Under these circumstances, for example, a technology for optimizing resources to be used for the wireless communication services has been proposed.

### Citation List

### Patent Literature

Patent Literature 1: Japanese Laid-open Patent Publication No. 2022-137294

### Summary

### Technical Problem

However, in the conventional technology, there is room for improvement in improving usability of the wireless communication services.

The present invention has been conceived in view of the foregoing situations, and an object of the present invention is to provide a communication control apparatus and a communication control method that are able to improve usability of a wireless communication service.

### Solution to Problem

To solve the above problem, a communication control apparatus includes, a prediction unit that compares information indicating a set area, a set date/time, and desired quality that are set by a user in relation to use of a wireless communication service, area information indicating an area covered by the wireless communication service, and a supply-demand forecast with respect to a communication resource corresponding to the set area and the set date/time, and predicts whether or not it is possible to provide the wireless communication service that meets the desired quality in the set area and at the set date/time; and a providing unit that provides a prediction result obtained by the prediction unit to the user.

### Advantageous Effects of Invention

According to one aspect of embodiments, it is possible to improve usability of a wireless communication service.

### Brief Description of Drawings

FIG. 1 is a diagram illustrating an overview of a communication system according to one embodiment.
FIG. 2 is a diagram for explaining an overview of information processing that is performed by a communication control apparatus according to one embodiment.
FIG. 3 is a diagram illustrating a first display example of a setting screen that is displayed on a terminal apparatus according to one embodiment.
FIG. 4 is a diagram illustrating a display example of a prediction result according to one embodiment.
FIG. 5 is a diagram illustrating a second display example of the setting screen that is displayed on the terminal apparatus according to one embodiment.
FIG. 6 is a diagram illustrating a configuration example of the communication control apparatus according to one embodiment.
FIG. 7 is a diagram illustrating an overview of a band determination table according to one embodiment.
FIG. 8 is a flowchart illustrating an example of the flow of a process that is performed by the communication control apparatus according to one embodiment.
FIG. 9 is a diagram illustrating an overview of a processing distribution table according to a modification.
FIG. 10 is a hardware configuration diagram illustrating a computer that implements functions of the communication control apparatus according to one embodiment.

### Description of Embodiments

Embodiments of the present disclosure will be described in detail below with reference to the accompanying drawings. Meanwhile, in the present specification and the drawings, components with substantially the same functional configurations are denoted by the same reference symbols, and repeated explanation will be omitted.

One or a plurality of embodiments (including examples, modifications, and application examples) described below may be implemented independently. In contrast, at least a part of the plurality of embodiments described below may be appropriately combined with at least a part of the other embodiments. The plurality of embodiments may include different novel features. Therefore, the plurality of embodiments may contribute to accomplish different objective or solve different problems, and achieve different effects.

### Embodiment

### 1. Introduction

In recent years, with regard to a mobile wireless network, a purpose of use and usage of a wireless network are diversified with the advent of high-speed communication standards, such as 5G, and high communication performance, such as connection stability, low latency, high reliability, high throughput, power saving, or low processing load, is demanded.

To cope with the diversification of the purpose of use and the usage as described above, initiatives for providing a network with different communication quality while controlling the network by the E2E Orchestrator technology for controlling a network by end-to-end or the like are underway.

In contrast, in some cases, even when a user designates a desired area or the like for use of a network, it may be difficult to promptly provide the network depending on a supply-demand balance because various kinds of resources that are needed to provide the network are limited. Further, even when the user designates a desired area or the like for use of a network, it is uncertain whether or not the network is available at a desired service level.

For example, even when an area in which a resource that is needed to use a network at a desired service level can be ensured is located a little far from a user's desired area, some users may give priority to use and, for example, may go to coffee shops to use Wi-Fi (registered trademark).

As described above, if it is possible to provide the user with information on an area, a time, or the like at which a resource that is needed to use a network at a desired service level can be ensured, it is possible to encourage flexible use of networks and expect improvement in usability.

An example of information processing will be described below that improves usability by providing, to the user, information on an area, a time, or the like at which a resource that is needed to use a network at a desired service level can be ensured.

### 2. Overview of communication system

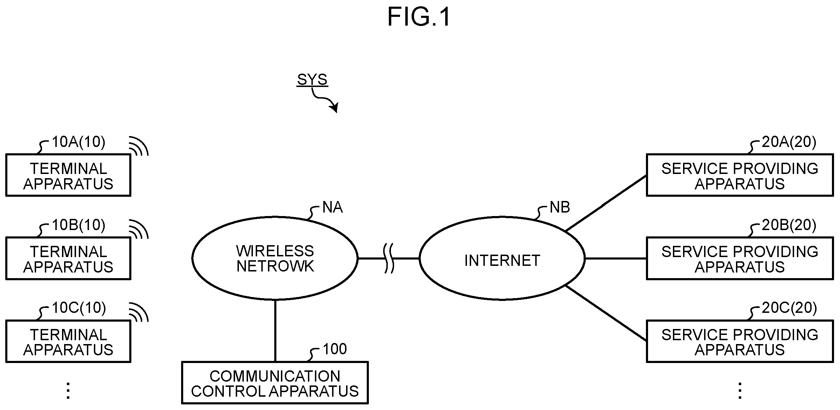

An overview of a communication system SYS according to one embodiment will be described below with reference to FIG. 1. FIG. 1 is a diagram illustrating an overview of the communication system SYS according to one embodiment. A communication control method that is implemented by information processing according to one embodiment is performed by the communication system SYS as illustrated in FIG. 1.

As illustrated in FIG. 1, the communication system SYS includes a plurality of terminal apparatuses 10, such as terminal apparatuses 10A, 10B, and 10C, a plurality of service providing apparatuses 20, such as service providing apparatuses 20A, 20B, and 20C, and a communication control apparatus 100. The terminal apparatuses 10, the service providing apparatuses 20, and the communication control apparatus 100 are connected to a wireless network NA and an Internet NB. The terminal apparatuses 10, the service providing apparatuses 20, and the communication control apparatus 100 are able to communicate with one another via the wireless network NA or the Internet NB.

The wireless network NA includes, for example, a Radio Access Network (RAN) and a core network. The wireless network NA provides a wireless communication environment in which mobile communication is available to users of the terminal apparatuses 10, by cooperation of each of apparatuses included in the Radio Access Network (also referred to as a "mobile network") and the core network.

The Radio Access Network includes, for example, a transmission line, antenna equipment, a base station, a line control apparatus, and the like. The Radio Access Network sends communication data that is received from the terminal apparatuses 10 to the core network.

The core network is a core network that includes a control apparatus, such as a gateway. The core network relays the communication data that is received from the Radio Access Network to the Internet NB.

The wireless network may be compatible with at least one of Long Term Evolution (LTE), New Radio (NR), and a Radio Access Technology (RAT), such as 6G. LTE, NR, and 6G are types of the cellular technology, and enable mobile communication of a terminal apparatus by allocating a plurality of areas covered by base stations in a cellular structure. Meanwhile, a radio access method that is used by a communication system 1 is not limited to LTE, NR, and 6G, but may be a different radio access method, such as Wideband Code Division Multiple Access (W-CDMA) or Code Division Multiple Access 2000 (cdma2000).

NR is the next-generation Radio Access Technology (the fifth generation) of LTE (the fourth generation including LTE-Advanced and LTE-Advanced Pro). 6G is the next-generation cellular technology of NR and 5GS (5G system) that are the 5th-generation mobile communication.

The base station may be a ground station or a non-ground station. The non-ground station may be a satellite station or an aircraft station. When the non-ground station is a satellite station, the wireless network may be a Bent-pipe (Transparent) type mobile satellite communication system.

Each of the terminal apparatuses 10 is an information processing terminal that is used by a user. The terminal apparatus 10 may be, for example, a smartphone, a wearable device, a tablet terminal, a notebook PC, a desktop PC, a mobile phone, a PDA, or the like.

The terminal apparatus 10, when an application is activated by the user, accesses a predetermined server apparatus corresponding to the application via the wireless network NA and the Internet NB, and acquires data from the predetermined server apparatus. The terminal apparatus 10 displays the acquired data and presents the data so as to be viewable by the user.

The terminal apparatus 10 may be configured to connect to a network by using a Radio Access Technology (RAT), such as LTE, NR, 6G, Wi-Fi, or Bluetooth (registered trademark). In this case, the terminal apparatus 10 may be configured to be able to use a different Radio Access Technology (wireless communication system). For example, the terminal apparatus 10 may be configured to be able to use NR and Wi-Fi. Furthermore, the terminal apparatus 10 may be configured to be able to use a different cellular technology (for example, LTE, NR, or 6G).

Each of the service providing apparatuses 20 is managed by a business operator who provides various kinds of online services to the users of the terminal apparatuses 10. Examples of the online services that are provided by the service providing apparatus 20 include a web conferencing service and a video streaming service.

The service providing apparatus 20 is typically an application server or a web server. Further, the service providing apparatus 20 may be a PC server, a midrange server, or a main frame server. Furthermore, the service providing apparatus 20 may be a system in which a plurality of server apparatuses cooperate with one another, or a cloud system in which a server apparatus and a storage apparatus cooperate with each other.

The communication control apparatus 100 is, for example, a RAN Intelligent Controller (RIC), and controls connection of the wireless network NA. The communication control apparatus 100 is managed by a communication provider that manages the wireless network NA and performs the information processing according to one embodiment. Further, the communication control apparatus 100 performs a process of optimizing a network resource (one example of a "communication resource"), such as a frequency band of the wireless network NA when the terminal apparatus 10 is connected to the Internet NB, or a computing resource for performing a process of controlling wireless communication via the wireless network NA, or a process of efficiently operating the wireless network NA. Furthermore, the communication control apparatus 100 cooperates with a data center that manages network resources, and manages, in real time, a network log that is time series data of a communication history, a usage status, or the like of a user who uses the wireless communication service.

### 3. Overview of information processing according to one embodiment

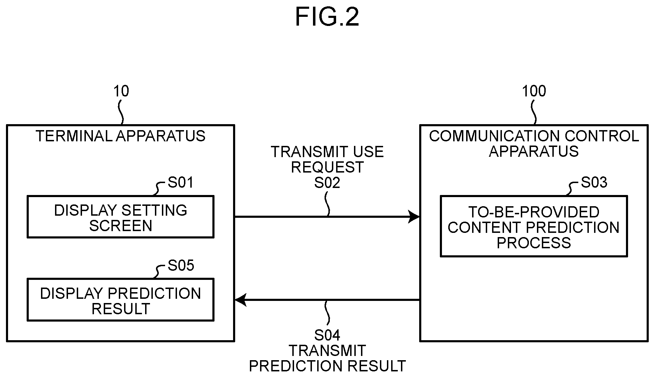

An overview of information processing that is performed by the communication control apparatus 100 according to one embodiment will be described below with reference to FIG. 2. FIG. 2 is a diagram illustrating an overview of the information processing that is performed by the communication control apparatus 100 according to one embodiment.

As illustrated in FIG. 2, the terminal apparatus 10 displays a setting screen for receiving, from a user, setting of a desired condition related to use of the wireless communication service (Step S01).

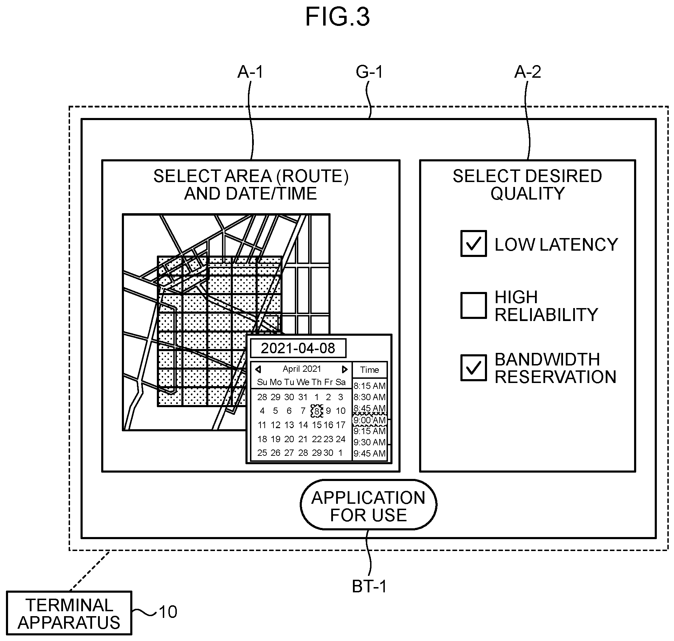

The setting screen may be a screen that is displayed by an application program that is set in advance for the user to receive various kinds of operation or the like on the wireless communication service, or a predetermined web page for receiving various kinds of operation or the like on the wireless communication service. An example of the setting screen that is displayed on the terminal apparatus 10 will be described below with reference to FIG. 3. FIG. 3 is a diagram illustrating a first display example of the setting screen that is displayed on the terminal apparatus 10 according to one embodiment.

The terminal apparatus 10 acquires, from the communication control apparatus 100, information for displaying a setting screen G-1 as illustrated in FIG. 3 in response to a request from the user. The terminal apparatus 10 displays the setting screen G-1 as illustrated in FIG. 3. The setting screen G-1 illustrated in FIG. 3 includes a setting area A-1 and a setting area A-2.

The setting area A-1 receives, from the user, designation of a set area that is a desired use area that is set by the user in relation to use of the wireless communication service, and a set date/time that is a desired use date/time that is set by the user in relation to use of the wireless communication service. Meanwhile, the setting area A-1 may be configured such that a desired route for use of the wireless communication service can be set. Further, the setting area A-2 receives, from the user, setting of desired quality that is a service level that is set by the user in relation to use of the wireless communication service.

The terminal apparatus 10 transmits a use request for the wireless communication service to the communication control apparatus 100 in response to a request from the user (Step S02). For example, when detecting user operation on a button BT-1 that is arranged in the setting screen G-1, the terminal apparatus 10 transmits the use request for the wireless communication service to the communication control apparatus 100. The use request includes information on use of the wireless communication service that is set by the user in the setting screen G-1.

The communication control apparatus 100, when receiving the request from the terminal apparatus 10, performs a to-be-provided content prediction process for predicting whether or not the wireless communication service is providable under the user's desired condition (Step S03).

For example, the communication control apparatus 100 compares the set area and the set date/time that are included in a use setting, area information that indicates a communication area covered by the wireless communication service, an a supply-demand forecast with respect to a network resource corresponding to the set area and the set date/time, and predicts whether or not it is possible to provide the wireless communication service that meets the desired quality that is included in the use setting in the set area and at the set date/time.

The communication control apparatus 100 is able to predict whether or not it is possible to provide the wireless communication service that meets the user's desired quality in the set area and at the set date/time, by using a trained model that is trained with respect to a supply-demand relationship of a bandwidth of the wireless network NA and a computing resource for each communication area that is an area in which the wireless communication service is provided. The trained model is generated by causing a model to learn, in chronological order, a supply-demand relationship of a network resource in each of areas, by using, as training data, a network log that is time series data of a communication history, a usage status, or the like of the user, for example.

Furthermore, when the to-be-provided content prediction process is completed, the communication control apparatus 100 transmits a prediction result to the terminal apparatus 10 (Step S04), and provides the prediction result to the user.

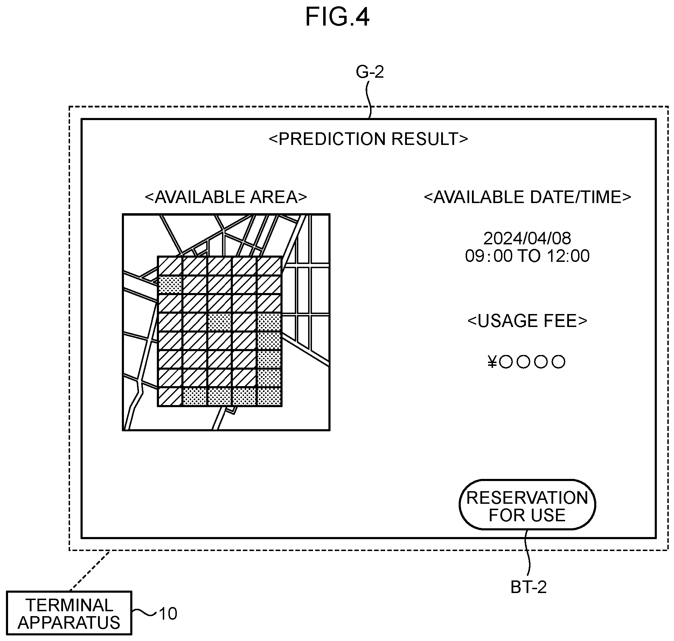

The terminal apparatus 10, when receiving the prediction result from the communication control apparatus 100, displays the received prediction result (Step S05). FIG. 4 illustrates a display example of the prediction result that is displayed on the terminal apparatus 10. FIG. 4 is a diagram illustrating a display example of a prediction result display screen that is displayed on the terminal apparatus 10 according to one embodiment.

A prediction result that is displayed on a prediction result display screen G-2 as illustrated in FIG. 4 includes information that indicates an available area in which the wireless communication service can be used with the desired quality, information that indicates an available date/time at which the wireless communication service can be used with the desired quality, and information that indicates an estimated usage fee. Meanwhile, the prediction result illustrated in FIG. 4 is one example, and therefore, the prediction result is not limited to the example illustrated in FIG. 4 and need not always include the information that indicates an estimated usage fee.

In the prediction result display screen G-2 that is displayed on the terminal apparatus 10, a button BT-2 for receiving, from the user, a reservation for use of the wireless communication service based on details provided as the prediction result is arranged. When detecting operation on the button BT-2, the terminal apparatus 10 transmits a use reservation request for making a reservation for use of the wireless communication service based on the details provided as the prediction result to the communication control apparatus 100.

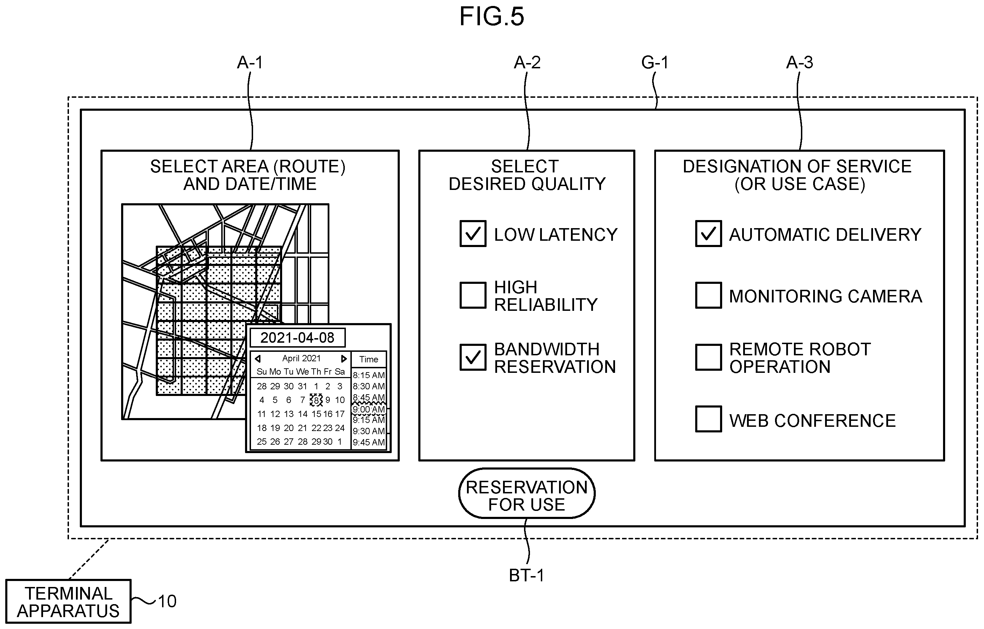

Further, the communication control apparatus 100 may receive, from the user, setting of information that indicates a service to be used by using the wireless communication service or information that indicates a use case of the wireless communication service, that is, information that indicates a purpose of use or the usage of the wireless communication service. In this case, the communication control apparatus 100 provides, as one of use setting, information for displaying a setting screen that can receive the setting of the service or the use case to the terminal apparatus 10. The terminal apparatus 10 displays the setting screen that can receive the service or the use case. FIG. 5 is a diagram illustrating a second display example of the setting screen that is displayed on the terminal apparatus 10 according to one embodiment.

As illustrated in FIG. 5, the setting screen G-1 further includes a setting area A-3, in addition to the setting area A-1 and the setting area A-2 as described above. The setting area A-3 further receives, from the user, setting of information that indicates the service to be used by using the wireless communication service or the use case of the wireless communication service.

The terminal apparatus 10 transmits a use request for the wireless communication service to the communication control apparatus 100 in response to a request from the user. The terminal apparatus 10, when detecting user operation on the button BT-1 that is arranged in the setting screen G-1 for example, transmits the use request for the wireless communication service to the communication control apparatus 100. The use request includes information that indicates the service to be used by using the wireless communication service or the use case of the wireless communication service, which is set as the information on use of the wireless communication service in the setting screen G-1.

Furthermore, in this case, when receiving a use request from the terminal apparatus 10, the communication control apparatus 100 further acquires information that indicates the service to be used by using the wireless communication service or the use case of the wireless communication service, in addition to the set area and the set date/time that are included in the use request, and predicts whether or not it is possible to provide the wireless communication service that meets the desired quality while taking into account the service or the use case.

Moreover, when predicting that it is difficult to provide the wireless communication service that meets the desired quality that is set by the user in the set area and at the set date/time, the communication control apparatus 100 may change the set area or the set date/time that is set by the user, and predict a different date/time at which it is possible to provide the wireless communication service that meets the desired quality in the set area or a different area in which it is possible to provide the wireless communication service that meets the desired quality at the set date/time. Furthermore, the communication control apparatus 100 may provide, as the prediction result, information indicating the different date/time at which it is possible to provide the wireless communication service that meets the desired quality in the set area or the different area in which it is possible to provide the wireless communication service that meets the desired quality at the set date/time to the user.

For example, the communication control apparatus 100 changes the set date/time to a different date/time without changing the set area, and predicts a date/time at which the desired quality of the user is met. The communication control apparatus 100 changes the set date/time in arbitrary units, such as in hours or in days, and predicts communication quality for each changed date/time. Further, the communication control apparatus 100 changes the set area to a different area without changing the set date/time, and predicts an area in which the desired quality of the user is met. The communication control apparatus 100 sequentially changes the areas from the neighborhood of the set area, and predicts communication quality for each changed area.

### 4. Configuration example of communication control apparatus

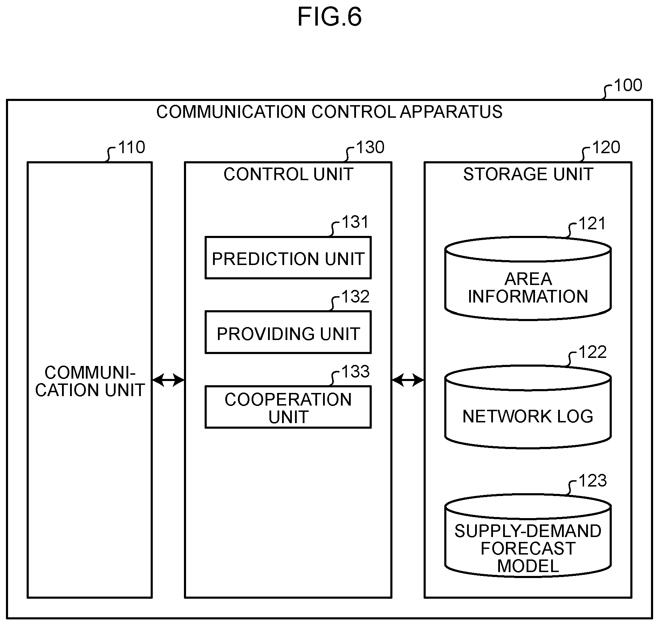

A functional configuration of the communication control apparatus 100 according to one embodiment will be described below with reference to FIG. 6. FIG. 6 is a diagram illustrating a configuration example of the communication control apparatus 100 according to one embodiment.

As illustrated in FIG. 6, the communication control apparatus 100 according to one embodiment includes a communication unit 110, a storage unit 120, and a control unit 130.

### Communication unit 110

The communication unit 110 transmits and receives various kinds of information to and from a different apparatus. The communication unit 110 is implemented by, for example, a communication module, a Network Interface Card (NIC), or the like. For example, the communication unit 110 is connected to the Internet NB in a wired or wireless manner. The communication unit 110 transmits and receives information to and from the terminal apparatus 10 via the Internet NB.

### Storage unit 120

The storage unit 120 stores therein, for example, a program and data that are used for control and calculations performed by the control unit 130. The storage unit 120 may be implemented by, for example, a semiconductor memory device, such as a Random Access Memory (RAM) or a flash memory, or a storage device, such as a hard disk or an optical disk. As illustrated in FIG. 6, the storage unit 120 stores therein area information 121, a network log 122, and a supply-demand forecast model 123.

### Area information 121

The area information 121 is information that indicates an area that is covered by a wireless communication service that is provided by a communication provider who manages the wireless network NA. The area that is covered by the wireless communication service corresponds to an area that is covered by a data center that manages a network resource, such as a bandwidth of the wireless network NA or a computing resource. The area information 121 may include information on an accommodated Radio Unit (RU) and coverage information on the RU.

### Network log 122

The network log 122 is time series data of a communication history, a usage status, or the like of the user who uses the wireless communication service.

### Supply-demand forecast model 123

The supply-demand forecast model 123 is a trained model that is trained with respect to a supply-demand relationship of a bandwidth of the wireless network NA and a computing resource for each communication area that is an area in which the wireless communication service is provided. The supply-demand forecast model 123 is generated by, for example, causing a model to learn, in chronological order, a supply-demand relationship of a network resource in each of areas, by using the network log 122 as training data.

### Control unit 130

The control unit 130 is a controller and performs various kinds of processes. The control unit 130 may be implemented by causing a Central Processing Unit (CPU), a Graphics Processing Unit (GPU), a Micro Processing Unit (MPU), or the like to execute various kinds of programs that are stored in an internal storage device of the communication control apparatus 100 while using a RAM as a work area.

Further, the control unit 130 may be implemented by, for example, an integrated circuit, such as an Application Specific Integrated Circuit (ASIC), a Field Programmable Gate Array (FPGA), or a General Purpose Graphic Processing Unit (PGPU).

As illustrated in FIG. 6, the control unit 130 includes a prediction unit 131, a providing unit 132, and a cooperation unit 133, and, with use of each of the units, implements or executes functions of information processing to be described below.

### Prediction unit 131

The prediction unit 131 compares information related to the use setting including the set area, the set date/time, and the desired quality that are set by the user with respect to use of the wireless communication service, area information that indicates an area covered by the wireless communication service, and a supply-demand forecast with respect to a communication resource corresponding to the set area and the set date/time, and predicts whether or not it is possible to provide the wireless communication service that meets the desired quality in the set area and at the set date/time.

Furthermore, the prediction unit 131 may further acquire, as the information on the use setting, information that indicates the service to be used by using the wireless communication service or the use case of the wireless communication service, and predict whether or not it is possible to provide the wireless communication service that meets the desired quality while taking into account the service or the use case that is indicated by the acquired information. In other words, the prediction unit 131 may further acquire the information that indicates a purpose of use or the usage of the wireless communication service, and predict whether or not it is possible to provide the wireless communication service that meets the desired quality while taking into account the acquired purpose of use or the acquired usage. With this configuration, a Mobile Network Operator (MNO) that manages the communication control apparatus 100 may be able to achieve an effect to optimize dynamic allocation of a network resource in accordance with the purpose of use or the usage of the network by the user.

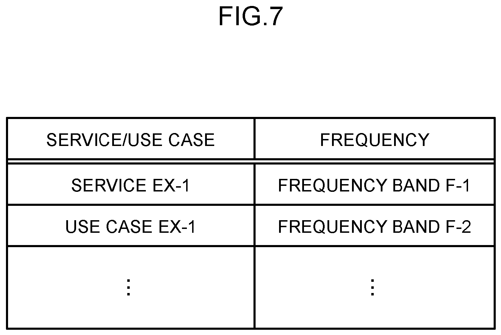

An example of a method of determining a bandwidth in accordance with the service or the use case will be described below with reference to FIG. 7. FIG. 7 is a diagram illustrating an overview of a band determination table according to one embodiment. The band determination table illustrated in FIG. 7 is arbitrarily set by a communication provider who provides the wireless communication service.

As illustrated in FIG. 7, the band determination table includes an item of a "service/use case" and an item of a "frequency band", in an associated manner. The communication control apparatus 100 distributes the number of users who are connected to a single frequency band, in accordance with the purpose of use or the usage of the user based on the band determination table.

For example, when the purpose of use or the usage that is set by the user with respect to the wireless communication service includes data streaming, such as viewing of a video content, it is expected to set a high frequency band, such as "3.9 GHz" or "2.1 GHz" in the band determination table.

Furthermore, for example, when the purpose of use or the usage that is set by the user with respect to the wireless communication service does not include data streaming, such as transmission of captured data that is captured by a monitoring web camera for performing fixed point imaging, it is expected to set a frequency band, such as "1.5 GHz" or "900 MHz", that is a lower frequency band as compared to the case of the data streaming in the band determination table.

The prediction unit 131 determines a frequency band that corresponds to the service or the use case that is set by the user, in accordance with a correspondence relationship as illustrated in FIG. 7. Further, the prediction unit 131 predicts a supply-demand situation of the frequency band that corresponds to the service or the use case of the user in the set area and at the set date/time.

Furthermore, when predicting that it is difficult to provide the wireless communication service that meets the desired quality, the prediction unit 131 may change the set area or the set date/time and predict a different date/time at which it is possible to provide the wireless communication service that meets the desired quality in the set area or a different area in which it is possible to provide the wireless communication service that meets the desired quality at the set date/time.

### Providing unit 132

The providing unit 132 provides a prediction result that is obtained by the prediction unit 131 to the user. For example, the providing unit 132 transmits, as information indicating the prediction result that is obtained by the prediction unit 131, information indicating an area in which it is possible to use the wireless communication service with the desired quality, information indicating a date/time at which it is possible to use the wireless communication service with the desired quality, information indicating an expected usage fee, or the like to the terminal apparatus 10 via the communication unit 110, and provides the information to the user. Meanwhile, the providing unit 132 may provide an optimal route corresponding to a supply-demand result to the user based on the prediction result of the prediction unit 131.

Furthermore, the providing unit 132 may provide, as the prediction result that is obtained by the prediction unit 131, information indicating a different date/time at which it is possible to provide the wireless communication service with the desired quality in the set area or information indicating a different area in which it is possible to provide the wireless communication service with the desired quality at the set date/time.

The providing unit 132 may calculate an expected usage fee when providing the prediction result to the user. Meanwhile, the control unit 130 may include a calculation unit that calculates the expected usage fee.

### Cooperation unit 133

The cooperation unit 133, when receiving a reservation for use of the wireless communication service based on details provided as the prediction result, registers a use reservation. Further, the cooperation unit 133 cooperates with each of apparatuses included in the wireless network NA so as to provide the wireless communication service in an available area or at an available date/time at which the service is available with the desired quality of the user. Meanwhile, at the time of making the use reservation, the cooperation unit 133 may register the use reservation based on a policy of giving priority to a paying user.

### 5. Flow of process performed by communication control apparatus

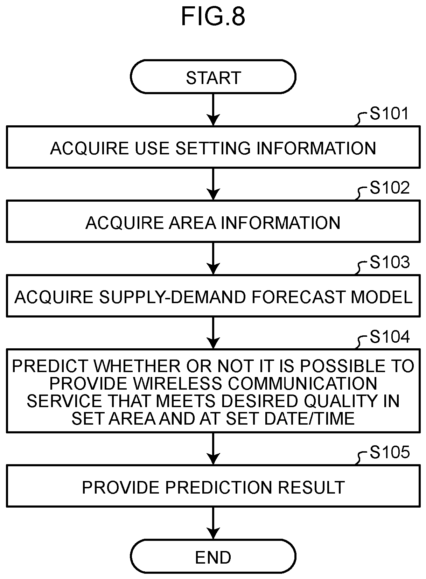

A flow of a process that is performed by the communication control apparatus 100 according to one embodiment will be described below with reference to FIG. 8. FIG. 8 is a flowchart illustrating an example of the flow of the process that is performed by the communication control apparatus 100 according to one embodiment. The flow of the process illustrated in FIG. 8 is implemented by the control unit 130 that is included in the communication control apparatus 100.

As illustrated in FIG. 8, the prediction unit 131 acquires use setting information that is information on the use setting of the wireless communication service from the user (Step S101).

Further, the prediction unit 131 acquires the area information 121 that is stored in the storage unit 120 (Step S102).

Furthermore, the prediction unit 131 acquires the supply-demand forecast model 123 that is stored in the storage unit 120 (Step S103).

Moreover, the prediction unit 131 compares the set area, the set date/time, and the desired quality, which are included in the use setting information, the area information, and the supply-demand forecast with respect to a communication resource corresponding to the set area and the set date/time, and predicts whether or not it is possible to provide the wireless communication service that meets the desired quality in the set area and at the set date/time (Step S104).

For example, the prediction unit 131 predicts whether or not it is possible to provide the wireless communication service that meets the user's desired quality in the set area and at the set date/time, by using the supply-demand forecast model 123 that is stored in the storage unit 120. Specifically, the prediction unit 131 inputs the set area and the set date/time to the supply-demand forecast model 123 and acquires a network resource supply-demand forecast that is output by the supply-demand forecast model 123. Further, the prediction unit 131 compares the acquired network resource supply-demand forecast and the desired quality of the user, and determines whether or not it is possible to provide the wireless communication service with the desired quality of the user.

Furthermore, at Step S104, when predicting that it is difficult to provide the wireless communication service with the user's desired quality, the prediction unit 131 may change the set area or the set date/time that is set by the user, and predicts a different date/time at which it is possible to provide the wireless communication service that meets the desired quality in the set area or a different area in which it is possible to provide the wireless communication service that meets the desired quality at the set date/time.

The providing unit 132 transmits the prediction result that is obtained by the prediction unit 131 to the terminal apparatus 10 via the communication unit 110 and provide the prediction result to the user (Step S105), and the flow of the process as illustrated in FIG. 8 is terminated.

### 6. Modifications

### 6-1. Distribution of processing in accordance with purpose of use of wireless communication service

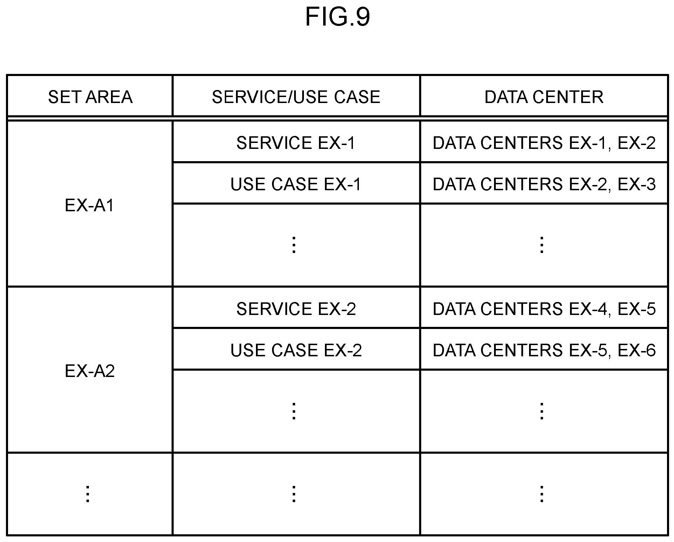

In the embodiments as described above, when it is possible to evaluate that a degree of demand of responsiveness of a user is low in accordance with the purpose of use or the like of the wireless communication service that is set by the user, the communication control apparatus 100 may distribute processing to a network resource in a different area from the set area of the user. FIG. 9 is a diagram illustrating an overview of a processing distribution table according to a modification.

The processing distribution table illustrated in FIG. 9 includes an item of a "set area", an item of a "service/use case", and an item of a "data center" in an associated manner. In the item of the "data center", a data center to which processing is to be distributed is set. The data center to which the processing is to be distributed is selected based on a distance from a set area that is set by a target user and an allowable delay amount that is calculated, in advance, in accordance with a service or a use case that is set by the target user.

When "low latency" is not designated as desired quality that is set by a user, the communication control apparatus 100 adopts the user as a target user whose degree of request of responsiveness is low. Further, the communication control apparatus 100 distributes processing of the wireless communication service for the target user in accordance with the processing distribution table as illustrated in FIG. 9. For example, the communication control apparatus 100 identifies a data center as a distribution destination based on the set area and the service/use case of the target user, and distributes the processing of the wireless communication service corresponding to the target user to the identified different communication control apparatus.

### 6-2. Recommendation of use setting based on behavior prediction of user

In the embodiments as described above, the communication control apparatus 100 may predict a behavior of a user who uses the wireless communication service, predict an area, a time slot, and desired quality of the wireless communication service based on a behavior prediction result, and give a recommendation to the user. For example, the communication control apparatus 100 predicts an everyday behavior of the user based on time series data that indicates a change of a location of the user (that is, the terminal apparatus 10) that is recognized by a base station that is included in the wireless network NA and based on details of a service that is connected by the user. Further, the communication control apparatus 100 dynamically sets a condition related to use of the wireless communication service corresponding to the behavior of the user based on a prediction result of the behavior of the user. For example, when predicting, as a behavior of a target user, that a video is viewed Monday through Friday, from 11 o'clock to 12 o'clock in a predetermined area, the communication control apparatus 100 proposes use of the wireless communication service with high reliability and low latency from 11 o'clock to 12 o'clock in the predetermined area.

### 7. Hardware configuration example

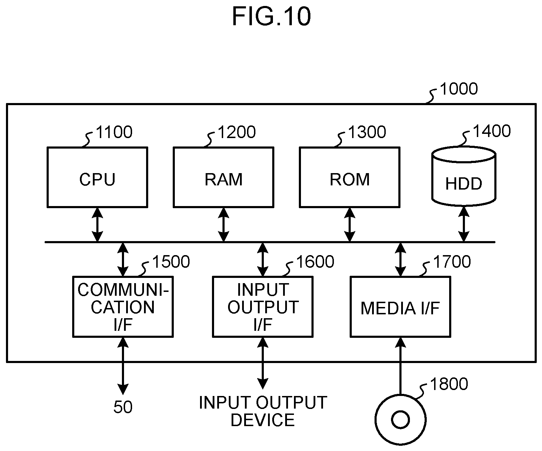

An example of a hardware configuration of the communication control apparatus according to one embodiment will be described below. The communication control apparatus 100 according to one embodiment may be implemented by, for example, a computer 1000 that is configured as illustrated in FIG. 10. FIG. 10 is a hardware configuration diagram illustrating an example of a computer that implements the communication control apparatus 100 according to one embodiment.

The computer 1000 includes a CPU 1100, a RAM 1200, a ROM 1300, an HDD 1400, a communication interface (I/F) 1500, an input output interface (I/F) 1600, and a media interface (I/F) 1700.

The CPU 1100 operates based on a program that is stored in the ROM 1300 or the HDD 1400, and controls each of the units. The ROM 1300 stores therein a boot program that is executed by the CPU 1100 at the time of activation of the computer 1000, a program that is dependent on hardware of the computer 1000, or the like.

The HDD 1400 stores therein a program that is executed by the CPU 1100, data that is used by the program, and the like. The communication interface 1500 receives data from a different apparatus via a predetermined communication network, sends the data to the CPU 1100, and transmits data that is generated by the CPU 1100 to a different apparatus via a predetermined communication network.

The CPU 1100 controls an output device, such as a display, and an input device, such as a keyboard, via the input output interface 1600. The CPU 1100 acquires data from the input device via the input output interface 1600. Further, the CPU 1100 outputs generated data to the output device via the input output interface 1600.

The media interface 1700 reads a program or data that is stored in a recording medium 1800, and provides the program or the data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium, such as a Digital Versatile Disc (DVD) or a Phase change rewritable Disk (PD), a magneto-optical recording medium, such as a Magneto-Optical disk (MO), a tape medium, a magnetic recording medium, a semiconductor memory, or the like.

For example, when the computer 1000 functions as the communication control apparatus 100 according to one embodiment, the CPU 1100 of the computer 1000 executes a program that is loaded on the RAM 1200, and implements the functions of the control unit 130. In other words, the CPU 1100 serving as a calculation apparatus implements the process of the communication control apparatus 100 according to one embodiment, in cooperation with the program that is loaded on the RAM 1200 serving as a primary storage device (for example, a program that provides functions to implement the information processing according to one embodiment). The CPU 1100 of the computer 1000 reads the program from the recording medium 1800 and executes the program; however, it may be possible to acquire the program from a different apparatus via a predetermined communication network.

### 8. Others

Furthermore, in the embodiments as described above, the communication control apparatus 100 performs allocation of network resources by using a network slicing technology for virtually dividing the wireless network NA. With this configuration, the communication control apparatus 100 is able to perform efficient allocation, such as allocation of a part of a frequency band of the wireless network NA to a service that is suitable for high speed and large capacity or allocation of a different part to a service that is suitable for high reliability and low latency.

The network slicing is identified by Single Network Slice Selection Assistance information (S-NSSAI). S-NSSAI is used as an identifier for a 5G System (5GS), a 5G-RAN, and a User Equipment (UE). The terminal apparatus 10, that is, a User Equipment (UE) is able to have eight pieces of S-NSSAI at maximum in the network slicing technology.

By setting S-NSSAI for each component in advance, it is possible to change S-NSSAI for each application. In other words, it is possible to establish a Packet Data Unit (PDU) session while changing S-NSSAI for each application as described above.

However, in actual operation, it is demanded to enable use while the UE does not aware of the setting. To cope with the demand as described above, it is possible to use a function called a User equipment Route Selection Policy (URSP). The URSP is a function to automatically use network slicing that is to be used in accordance with an application to be used.

A rule structure of the URSP is defined in "3GPP (registered trademark) TS 23.503 6.6.2.1". The rule of the URSP is transferred to the UE from a Policy Control Function (PCF) via an Access and Mobility Management Function (AMF). The URSP performs mapping of a specific user data traffic to a PDU session connection parameter. The SSC Mode Selection Policy (SSCMSP) associates a matched application with a Session and Service Continuity (SSC) mode. The Network Slice Selection Policy (NSSP) associates the matched application with S-NSSAI. The Data Network Name (DNN) session policy associates the matched application with a DNN. The PDU session type policy associates the matched application with a PDU session type. The Non-Seamless offroad policy determines to seamlessly offload the matched application to non-3GPP access (that is, outside the PDU session). The Access Type preference indicates a prioritized type when it is needed to establish the matched application with the PDU session.

The URSP is able to notify the UE of S-NSSAI that is used by each of the applications from a 5GC (5G Core, that is, a core network) when the UE starts communication.

Thus, embodiments of the present application have been described above, but technical scope of the present invention is not limited to the scope as described in the embodiments above. It is obvious that a person skilled in the art may conceive various alternations and modifications to the embodiments as described above. It is obvious, from the description of the appended claims, that the modes with the alternations and modifications will naturally come under the technical scope of the present invention.

It should be understood that order of execution of each of processes, such as operation, procedure, steps, stages, and the like in the apparatuses, the systems, the programs, and the method described in the appended claims, the specification, and the drawings does not specifically indicates "before", "preceding to", and the like, and the processes may be performed in arbitrary order except for a case in which output of a preceding process is used in a subsequent process. In the operational flows described in the appended claims, the specification, and the drawings, "firstly", "subsequently", or the like may be used for the sake of convenience, but this does not indicate that the processes need to be performed in this order.

### Reference Signs List

- SYS: communication system

- 10: terminal apparatus
- 20: service providing apparatus
- 100: communication control apparatus
- 110: communication unit
- 120: storage unit
- 121: area information
- 122: network log
- 123: supply-demand forecast model
- 130: control unit
- 131: prediction unit
- 132: providing unit
- 133: cooperation unit

## Claims

1. A communication control apparatus comprising:
a prediction unit that compares information indicating a set area, a set date/time, and desired quality that are set by a user in relation to use of a wireless communication service, area information indicating an area covered by the wireless communication service, and a supply-demand forecast with respect to a communication resource corresponding to the set area and the set date/time, and predicts whether or not it is possible to provide the wireless communication service that meets the desired quality in the set area and at the set date/time; and
a providing unit that provides a prediction result obtained by the prediction unit to the user.

2. The communication control apparatus according to claim 1, wherein the prediction unit further acquires, as information that is set by the user in relation to use of the wireless communication service, information indicating one of a service to be used by using the wireless communication service and a use case of the wireless communication service, and predicts whether or not it is possible to provide the wireless communication service that meets the desired quality while taking into account one of the service and the use case.

3. The communication control apparatus according to claim 1 or 2, wherein
when predicting that it is difficult to provide the wireless communication service that meets the desired quality, the prediction unit changes one of the set area and the set date/time, and predicts one of a different date/time at which it is possible to provide the wireless communication service that meets the desired quality in the set area and a different area in which it is possible to provide the wireless communication service that meets the desired quality at the set date/time, and
the providing unit provides, as the prediction result, one of information indicating the different date/time at which it is possible to provide the wireless communication service that meets the desired quality in the set area and information indicating the different area in which it is possible to provide the wireless communication service that meets the desired quality at the set date/time to the user.

4. A communication control method that is implemented by a computer, the communication control method comprising:
a prediction step of
comparing information indicating a set area, a set date/time, and desired quality that are set by a user in relation to use of a wireless communication service, area information indicating an area covered by the wireless communication service, and a supply-demand forecast of a communication resource corresponding to the set area and the set date/time; and
predicting whether or not it is possible to provide the wireless communication service that meets the desired quality in the set area and at the set date/time; and
a providing step of providing a prediction result obtained at the prediction step to the user.
